# EUROPÄISCHE PATENTANMELDUNG

(11) **EP 2 557 116 A1**
(43) Veröffentlichungstag der Anmeldung: **13.02.2013**
(21) Anmeldenummer: 11177444.4
(22) Anmeldetag: 12.08.2011
(51) Int. Cl.: C08L 21/00, C08K 5/54, B60C 1/00, C07F 7/18

(54) **Additive für kieselsäurehaltige Kautschukmischungen**

(71) Anmelder: LANXESS Deutschland GmbH, 51369 Leverkusen (DE)
(72) Erfinder: Weidenhaupt, Hermann-Josef Dr., 50259 Pulheim (DE); Wiedemeier, Melanie, 41540 Dormagen (DE); Feldhues, Ulrich Dr., 51465 Bergisch Gladbach (DE)

(57) **Zusammenfassung**

Die Erfindung betrifft neue Additive auf Basis von Organosilizium-polysulfiden und deren Verwendung in kieselsäurehaltigen Kautschukmischungen, kieselsäurehaltige Kautschukmischungen enthaltend diese Additive und die daraus hergestellten Kautschukvulkanisate.

## Beschreibung

Die Erfindung betrifft neue Additive auf Basis von Organosilizium-polysulfiden und deren Verwendung in kieselsäurehaltigen Kautschukmischungen sowie kieselsäurehaltige Kautschukmischungen enthaltend diese Additive, die daraus hergestellten Kautschukvulkanisate, Verfahren zu deren Herstellung und die daraus hergestellten Produkte.

20 bis 25 Prozent des Treibstoffverbrauchs eines Pkw resultieren aus dem Rollwiderstand der Reifen, bei Lastkraftwagen sind es sogar rund 30 Prozent.

Diese Werte haben die EU-Kommission veranlasst, die Automobilindustrie per Verordnung zum Einsatz rollwiderstandsarmer Reifen zu verpflichten. Für Neuwagen tritt die Pflicht im Jahr 2011 in Kraft. Den weitaus größeren Teil des Marktes machen allerdings Reifen aus, die als Ersatz für alte und abgefahrene Pneus verwendet werden. Diese müssen ab 2012 hinsichtlich ihrer Kraftstoffeffizienz, Nasshaftung und Rollgeräusche gekennzeichnet werden. Ahnlich dem bereits von Haushaltsgeräten bekannten System sollen Klassen von A (beste Leistung) bis G (schlechteste Leistung) mehr Transparenz für den Verbraucher herbeiführen und als Entscheidungshilfe beim Kauf neuer Reifen dienen.

Spätestens seit sich die Europäische Union mit den Grenzwerten für den Kohlendioxidausstoß durch Pkws befasst, suchen die Automobilhersteller nach wirtschaftlichen Möglichkeiten, um die Zielmarke von höchstens 130 g/km CO₂-Emission zu erreichen. Wesentliche Bedeutung kommt dabei rollwiderstandsarmen Reifen zu. Sie leisten beim Abrollen weniger Verformungsarbeit und senken deshalb den Kraftstoffverbrauch.

Damit die Verminderung des Rollwiderstands nicht auf Kosten anderer wichtiger Eigenschaften geschieht, werden zugleich auch die Anforderungen an die Nasshaftung und das Rollgeräusch festgelegt. Einen ersten Hinweis auf Nassrutschverhalten und Rollwiderstand gibt der Verlustfaktor tan δ. Bei 0 °C sollte dieser möglichst hoch sein (gute Nassrutschfestigkeit), bei 60 bis 70 °C möglichst niedrig (Reduktion des Rollwiderstands).

Es besteht also ein großer Bedarf an verbesserten Kautschukmischungen, die beim Einsatz in der Reifenherstellung zu Produkten führen, die über verbesserte Eigenschaften, wie geringeren Rollwiderstand und Rollgeräusch und bessere Nasshaftung, verfügen.

Zur Herstellung von Reifen mit verringertem Rollwiderstand sind bereits eine Reihe von Lösungsvorschlägen ausgearbeitet worden. In DE-A 2 255 577, DE-A 4 435 311, EP-A 0670 347 sowie US-A 4 709 065 sind bestimmte polysulfidische Silane als Verstärkungsadditive für kieselsäurehaltige Kautschukvulkanisate beschrieben worden. Diese Verstärkungsadditive sind aber noch verbesserungsbedürftig. Nachteilig bei der Verwendung dieser bekannten Additive ist z.B. dass zur Erreichung einer akzeptablen Verarbeitbarkeit relativ große Mengen der teuren polysulfidischen Silane eingesetzt werden müssen.

Die Verwendung von Bis-(3-(trialkoxysilyl)-alkyl-polysulfiden als Additive für Kautschuk ist seit langem bekannt (vgl. z.B. DE-A-2 255577) Auch in der EP-A 1 000 968 wird ein Bis-[-3-(triethoxysilyl)-propyl]-tetrasulfid in Kombination mit einem speziellen Reversionsschutzmittel in SBR eingesetzt, wobei die Modul 300-Werte (der Spannungswert gemessen bei 300% Dehnung) sehr niedrig und damit unzureichend sind.

Auch die Verwendung bestimmter Organosilizium-polysulfide in Kautschukmischungen ist bekannt. So werden in der EP-A 670347 und in der EP-A 748839 bereits Schwefel- und Silizium-haltige Additive als Verstärkungsadditiv in Kautschukmischungen beschrieben. Diese bekannten Additive zeigen keine gravierenden Vorteile in ihrer Wirksamkeit im Vergleich zu den im Stand der Technik eingesetzten Bis-[-3-(triethoxysilyl)-propyl]-tetrasulfid bezogen auf eine Reduktion des Rollwiderstands.

In der EP-A 864608 werden polysulfidische Polyethersilane in Kautschukmischungen beschrieben deren Eigenschaften aber auch verbesserungswürdig sind.

Aufgabe der vorliegenden Erfindung war es, ein Additiv für kieselsäurehaltige Kautschukmischungen zu finden, das Vulkanisate mit verbesserten Eigenschaften, beispielsweise im Hinblick auf den Rollwiderstand von Reifen, liefert.

Es wurde nun gefunden, dass eine Mischung zweier Organosilizium-polysulfide ein hervorragendes Additiv für kieselsäurehaltige Kautschuke liefert. Überraschenderweise verleiht das erfindungsgemäße Additiv den damit hergestellten Vulkanisaten ein verbessertes dynamisches Verhalten, was sich z.B. in deutlich niedrigeren Werten für den Verlustfaktor tan δ (bei 60°C) bemerkbar macht. Der tan δ -Wert ist ein Indikator für den Rollwiderstand eines Reifens. Eine Reduzierung des tan δ -Wertes macht sich also in einer Verringerung des Rollwiderstandes z.B. eines Autoreifens bemerkbar.

Durch Verwendung der erfindungsgemäßen Additive lassen sich daher umweltfreundlichere Reifen im Sinne der für 2012 geplanten Klassifizierung herstellen und somit das "Magische Dreieck" der Reifentechnologie optimieren. Durch Einsatz der erfindungsgemäßen Additive in Kautschuken lassen sich kostengünstig Reifen herstellen, die sich durch einen geringeren Laufwiderstand/Rollwiderstand in Kombination mit guter Nassrutschfestigkeit und langer Laufleistung auszeichnen.

Weiterhin zeichnen sich die erfindungsgemäßen Additive dadurch aus, dass sie die Fließfähigkeit der damit hergestellten Kautschukmischungen nicht negativ beeinflussen.

Gegenstand der vorliegenden Erfindung sind daher Mischungen von Organosilizium-polysulfiden enthaltend mindestens eine Verbindung der Formel

R¹R²R³Si -X¹-Sₓ-X²-SiR¹R²R³ (I)

worin
R¹, R² und R³ unabhängig voneinander für Alkoxy stehen,
X¹ und X² unabhängig voneinander für Alkylen stehen,
und
x für eine ganze Zahl von 1 bis 6 steht,
und mindestens eine Verbindung der Formel

R⁴R⁵R⁶Si-X³-(-S_{y}-Y-)ₘ -S_{y}-X⁴-SiR⁷R⁸R⁹ (II)

worin
X³ und X⁴ unabhängig von einander für Alkylen stehen,
Y für eine zweiwertige, gegebenenfalls substituierte, gegebenenfalls Heteroatome enthaltende aliphatische, cycloaliphatische oder aromatische Gruppe steht,
y für eine ganze Zahl von 1 bis 6 steht,
m für eine ganze Zahl von 1 bis 20 steht
und
R⁴, R⁵, R⁶, R⁷, R⁸ und R⁹ unabhängig voneinander für -OH, -OMetall, Alkyl, Alkoxy, Phenyl, Phenoxy
oder für einen Rest der Formel

-O-R⁵R⁶Si -X³-(-S_{y}-Y-)ₘ -S_{y}-X⁴-SiR⁷R⁸R⁹ (IIa)

steht, wobei die Substituenten und Indices der Formel (IIa) die oben für Formel (II) angegebene Bedeutung haben,
Metall für ein Metallion aus der Reihe der Alkali- und Erdalkalimetalle steht,
und gegebenenfalls die Reste der Formel (IIa) über eine oder mehrere -Si-O-Si-Einheiten mit weiteren Resten der Formel (IIa) verbunden sind.

Bevorzugt sind Mischungen enthaltend mindestens eine Verbindung der oben angegebenen Formel (I), worin
R¹, R² und R³ unabhängig voneinander für C₁-C₆-Alkoxy stehen,
X¹ und X² unabhängig voneinander für C₁-C₆-Alkylen stehen,
und
x für eine ganze Zahl von 1 bis 4 steht,
und mindestens eine Verbindung der oben angegebenen Formel (II),
worin
X³ und X⁴ unabhängig von einander für C₁-C₆-Alkylen stehen,
Y für einen geradkettigen, verzweigten oder cyclischen C₁-C₁₈-Alkylenreste steht der gegebenenfalls mit C₆-C₁₂-Aryl-, C₁-C₈-Alkoxy- oder Hydroxygruppen substituiert ist und der gegebenenfalls durch Sauerstoff-, Schwefel- oder Stickstoffatome oder durch C₆-C₁₂-Aryl unterbrochen ist, oder für eine zweiwertige, gegebenenfalls substituierte, gegebenenfalls Heteroatome enthaltende aliphatische, cycloaliphatische oder aromatische Gruppe steht,
y für eine ganze Zahl von 2 bis 4 steht,
m für eine ganze Zahl von 1 bis 6 steht
und
R⁴, R⁵, R⁶, R⁷, R⁸ und R⁹ unabhängig voneinander für -OH, -OMetall, oder, C₁-C₈-Alkoxy stehen,
oder für einem Rest der Formel

-O-R⁵R⁶Si-X³-(-S_{y}-Y-)ₘ -S_{y}-X⁴-SiR⁷R⁸R⁹ (IIa)

stehen, wobei die Substituenten und Indices der Formel (IIa) die oben für Formel (II) angegebene Bedeutung haben,
Metall für ein Metallion ausgewählt aus der Reihe Na, K, Mg/2 und Ca/2 steht,
und gegebenenfalls die Reste der Formel (IIa) über eine oder mehrere -Si-O-Si-Einheiten mit weiteren Resten der Formel (IIa) verbunden sind.
Besonders bevorzugt sind Mischungen enthaltend mindestens eine Verbindung der oben angegebenen Formel (I), worin
R¹, R² und R³ unabhängig voneinander für C₁-C₂-Alkoxy stehen,
X¹ und X² unabhängig voneinander für C₂-C₃-Alkylen stehen,
und
x für 2, 3 oder 4 steht,
und mindestens eine Verbindung der oben angegebenen Formel (II),
worin
X³ und X⁴ unabhängig von einander für C₂-C₃-Alkylen stehen,
Y für einen Rest der Formel 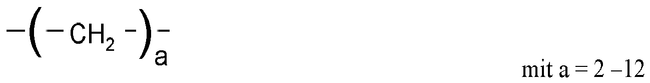 oder 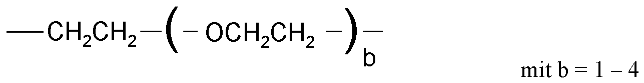 steht,
y für 2, 3 oder 4 steht,
m für 1, 2, 3, 4, 5 oder 6 steht,
R⁴, R⁵, R⁶, R⁷, R⁸ und R⁹ unabhängig voneinander für -OH, -ONa, -OK, -O-(Mg/2), -O-(Ca/2), Methoxy oder Ethoxy oder
für einen Rest der Formel

-O-R⁵R⁶Si-X³-(-S_{y}-Y-)ₘ-S_{y}-X⁴-SiR⁷R⁸R⁹ (IIa)

stehen, wobei die Substituenten und Indices der Formel (IIa) die oben für Formel (II) genannten Bedeutungen haben,
und gegebenenfalls die Reste der Formel (IIa) über eine oder mehrere -Si-O-Si-Einheiten mit weiteren Resten der Formel (IIa) verbunden sind.

Ganz besonders bevorzugt sind Mischungen enthaltend mindestens eine Verbindung der oben angegebenen Formel (I), worin
R¹, R² und R³ unabhängig voneinander für Methoxy oder Ethoxy stehen,
X¹ und X² unabhängig voneinander für C₂-C₃-Alkylen stehen,
und
x für 2, 3 oder 4 steht,
und mindestens eine Verbindung der oben angegebenen Formel (II),
worin
X³ und X⁴ unabhängig von einander für C₂-C₃-Alkylen stehen,
Y für -(CH2)-₆ steht
y für 2, 3 oder 4 steht,
m für 1 steht,
R⁴, R⁵, R⁶, R⁷, R⁸ und R⁹ unabhängig voneinander für -OH, -ONa, Methoxy oder Ethoxy oder für einen Rest der Formel

-O-R⁵R⁶Si-X³-(-S_{y}-Y-)ₘ-S_{y}-X⁴-SiR⁷R⁸R⁹ (IIa)

stehen, wobei die Substituenten und Indices der Formel (IIa) die oben für Formel (II) genannten Bedeutungen haben,
und gegebenenfalls die Reste der Formel (IIa) über eine oder mehrere -Si-O-Si-Einheiten mit weiteren Resten der Formel (IIa) verbunden sind.

Insbesondere bevorzugt sind als Verbindungen der Formel (I) zu nennen:

Bis-(triethoxysilylpropyl)-tetrasulfan und Bis-(triethoxysilylpropyl-disulfan Es können auch Mischungen aus diesen genannten Verbindungen der Formel (I) eingesetzt werden.

Die Verbindungen der Formel (II) können als Monomere oder als vernetzte Strukturen vorliegen. Bevorzugt handelt es sich bei den Verbindungen der Formel (II) um vernetzte Organosilizium-polysulfide, die über wenigstens eine Si-O-Si-Einheit verbunden sind. Vorzugsweise sind wenigstens 50 Prozent der enthaltenen Si-Atome über wenigstens eine Si-O-Si-Einheit verbunden. Bevorzugt sind mindestens 50 % der Si-Atome der Verbindungen der Formel (II) über mindestens eine -Si(OSi-)₂- und ganz besonders bevorzugt über mindestens eine

-Si(OSi-)₃- Einheit vernetzt.

Die Verbindungen der Formel (II) enthalten im Allgemeinen
0 bis 100 Gew.-% an Struktureinheiten der Formel -Si(OSi)₃
0 bis 50 Gew.-% an Struktureinheiten der Formel -Si(OSi)₂(OR)₁
0 bis 50 Gew.-% an Struktureinheiten der Formel -Si(OSi)₁(OR)₂
0 bis 100 Gew.-% an Struktureinheiten der Formel - Si(OR)₃
wobei R insbesondere für H, Methyl und/oder Ethyl steht und sich die Gew.-% auf 100 Prozent addieren.

Die Verbindungen der Formel (II) enthalten bevorzugt
0 bis 100 Gew.-% an Struktureinheiten der Formel -Si(OSi)₃
0 bis 50 Gew.-% an Struktureinheiten der Formel -Si(OSi)₂(OR)₁
0 bis 30 Gew.-% an Struktureinheiten der Formel -Si(OSi)₁(OR)₂
0 bis 20 Gew.-% an Struktureinheiten der Formel - Si(OR)₃
wobei R insbesondere für H, Methyl und/oder Ethyl steht und sich die Gew.-% auf 100 Prozent addieren.

Die oben angegebenen Gewichtsprozente beziehen sich jeweils auf 100 Gew.-% an Verbindung der Formel (II).

Insbesondere bevorzugt sind Mischungen von Verbindungen der Formel (I) in ihrer allgemeinen und bevorzugten Bedeutung mit Verbindungen der Formel (II), worin
X³ und X⁴ unabhängig von einander für C₂-C₃-Alkylen stehen,
Y für -(CH2)-₆ steht,
y für 2, 3 oder 4 steht,
m für 1 steht,
R⁴, R⁵, R⁶, R⁷, R⁸ und R⁹ unabhängig voneinander für -OH, -ONa, Methoxy oder Ethoxy steht,
und wenigstens einer, vorzugsweise mehrere der Reste R⁴, R⁵, R⁶, R⁷, R⁸ und R⁹ für einen Rest der Formel

-O-R⁵R⁶Si-X³-(-S_{y}-Y-)ₘ-S_{y}-X⁴-SiR⁷R⁸R⁹ (IIa)

steht, wobei die Substituenten und Indices der Formel (IIa) die oben für Formel (II) genannten Bedeutungen haben,
und gegebenenfalls die Reste der Formel (IIa) über eine oder mehrere -Si-O-Si-Einheiten mit weiteren Resten der Formel (IIa) verbunden sind,
und die Verbindung der Formel (II)
0 bis 100 Gew.-%, vorzugsweise 40-90 Gew.-%, und insbesondere 50-80 Gew.-% an Struktureinheiten der Formel -Si(OSi)₃
0 bis 50 Gew.-%, vorzugsweise 10-40 Gew.-%, und insbesondere 10-30 Gew.-% an Struktureinheiten der Formel -Si(OSi)₂(OR)₁
0 bis 30 Gew.-%, vorzugsweise 0-20 Gew.-%, und insbesondere 5-15 Gew.-% an Struktureinheiten der Formel -Si(OSi)₁(OR)₂
0 bis 20 Gew.-%, vorzugsweise 0-10 Gew.-%, und insbesondere 0-5 Gew.-% an Struktureinheiten der Formel -Si(OR)₃
wobei R jeweils für H, Methyl und/oder Ethyl steht,
aufweisen.

Die erfindungsgemäßen Mischungen enthalten im allgemeinen 50-95 Gew.-% an Verbindung der Formel (I) und 5-50 Gew.-% an Verbindung (II), bevorzugt 60-90 Gew.-% an Verbindung der Formel (I) und 10-40 Gew.-% an Verbindung (II), besonders bevorzugt 70-90 Gew.-% an Verbindung der Formel (I) und 10-30 Gew.-% an Verbindung (II) bezogen auf die Mischung beider Komponenten.

Die Verbindungen der Formel

R⁴R⁵R⁶Si-X³-(-S_{y}-Y-)ₘ-S_{y}-X⁴-SiR⁷R⁸R⁹ (II)

worin
X³ und X⁴ unabhängig von einander für Alkylen stehen,
Y für eine zweiwertige, gegebenenfalls substituierte, gegebenenfalls Heteroatome enthaltende aliphatische, cycloaliphatische oder aromatische Gruppe steht,
y für eine ganze Zahl von 1 bis 6 steht,
m für eine ganze Zahl von 1 bis 20 steht
und
R⁴, R⁵, R⁶, R⁷, R⁸ und R⁹ unabhängig voneinander für -OH, -OMetall, Alkyl, Alkoxy, Phenyl, Phenoxy stehen, und
mindestens einer der Substituenten R⁴, R⁵, R⁶, R⁷, R⁸ und R⁹ für einen Rest der Formel

-O-R⁵R⁶Si-X³-(-S_{y}-Y-)ₘ-S_{y}-X⁴-SiR⁷R⁸R⁹ (IIa)

steht, wobei die Substituenten und Indices die oben für Formel (II) angegebene Bedeutung haben,

Metall für ein Metallion aus der Reihe der Alkali- und Erdalkalimetalle steht,
und gegebenenfalls die Reste der Formel (IIa) über eine oder mehrere -Si-O-Si-Einheiten mit weiteren Resten der Formel (IIa) verbunden sind,
sind neu und Gegenstand einer parallelen, zeitgleich beim Europäischen Patentamt eingereichten Patentanmeldung.

Die erfindungsgemäßen Mischungen eignen sich hervorragend als Additive für kieselsäurehaltige Kautschuke.

Gegenstand der vorliegenden Erfindung ist weiterhin die Verwendung der erfindungsgemäßen Mischungen als Verstärkungsadditiv für Kautschukmischungen.

Dabei werden die erfindungsgemäßen Mischungen in an sich bekannter Weise mit den Bestandteilen der Kautschukmischung vermischt.

Die erfindungsgemäßen Mischungen werden der Kautschukmischung in einer Menge von 0,1 bis 30 Gew.-%, vorzugsweise von 0,3 bis 13 Gew.-%, insbesondere 0,5 bis 11 Gew.-% bezogen auf 100 Gew.-% Kautschuk zugesetzt.

Bevorzugt sind die Additive der Formel (I) flüssig und die Additive der Formel (II) fest. Ganz besonders bevorzugt sind die Additive der Formel (II) in organischen Lösungsmitteln und Wasser weitestgehend unlöslich.

Flüssige Schwefel-haltige Silane der Formel (I) können zur besseren Dosierbarkeit und/oder Dispergierbarkeit auf einem Träger aufgezogen sein (dry liquid). Der Wirkstoffgehalt liegt zwischen 30 und 70 Gew.-Teilen, bevorzugt 40 und 60 Gew.-Teilen je 100 Gew.-Teile dry liquid. In dieser Form können diese Verbindungen auch so in der Mischung vorliegen.

Überraschenderweise wurde gefunden, dass die erfindungsgemäßen Mischungen einen synergistischen Effekt aufweisen. Beim Einsatz der erfindungsgemäßen Mischungen als Verstärkungsadditiv beobachtet man eine deutliche Absenkung des Verlustfaktors (tan delta) bei 60°C, was auf ein geringeres Kieselsäure-Kieselsäure-Netzwerk hindeutet im Vergleich zu der Verstärkungswirkung der einzelnen Bestandteile der Mischung.

Weiterer Gegenstand der vorliegenden Erfindung sind kieselsäurehaltige Kautschukmischungen enthaltend mindestens ein erfindungsgemäßes Additiv. Die erfindungsgemäßen Kautschukmischungen enthalten mindestens einen Kautschuk, einen Vernetzer, einen Füllstoff sowie gegebenenfalls weitere Kautschukhilfsprodukte.

Die erfindungsgemäßen Kautschukmischungen lassen sich in bekannter Weise herstellen, indem man die einzelnen Bestandteile miteinander mischt (z.B. über einen Innenmischer, Walze, Extruder).

Bevorzugt enthält die erfindungsgemäße kieselsäurehaltige Kautschukmischung mindestens einen SBR-Kautschuk und mindestens einen BR-Kautschuk.

Vorzugsweise weist sie mindestens einen SBR-Kautschuk und mindestens einen BR-Kautschuk im Gewichts-Verhältnis SBR:BR= 60:40 bis 90:10 auf.

Zusätzlich kann die kieselsäurehaltige Kautschukmischung mindestens einen NR-Kautschuk enthalten.

Bevorzugt weist sie wenigstens einen SBR-Kautschuk und wenigstens einen BR-Kautschuk und wenigstens einen NR-Kautschuk im Verhältnis mindestens 60 und maximal 85 Gewichtsprozente SBR bezogen auf Kautschuk und mindestens 10 und maximal 35 Gewichtsprozente BR bezogen auf Kautschuk und mindestens 5 und maximal 20 Gewichtsprozente NR bezogen auf Kautschuk auf.

Für die Herstellung der erfindungsgemäßen Kautschukmischungen und der erfindungsgemäßen Kautschukvulkanisate eignen sich neben Naturkautschuk auch Synthesekautschuke. Bevorzugte Synthesekautschuke sind beispielsweise bei W. Hofmann, Kautschuktechnologie, Genter-Verlag, Stuttgart 1980, beschreiben.

Sie umfassen u.a.
BR- Polybutadien
ABR- Butadien/Acrylsäure-C1-C4-alkylester-Copolymerisat
CR- Polychloropren
IR- Polyisopren
SBR- Styrol/Butadien-Copolymerisate mit Styrolgehalten von 1 - 60, vorzugsweise 20-50 Gew.-%
IIR- Isobutylen/Isopren-Copolymerisate
NBR- Butadien (Acrylnitril-Copolymerisate mit Acrylnitrilgehalten von 5-60, vorzugsweise 10-50 Gew.-%
HNBR-teilhydrierter oder vollständig hydrierter NBR-Kautschuk
EPDM- Ethylen/Propylen/Dien-Copolymerisate
sowie Mischungen dieser Kautschuke.

Die erfindungsgemäßen kieselsäurehaltigen Kautschukmischungen enthalten im Allgemeinen 0,1 bis 15 Gewichtsteile an erfindungsgemäßem Additiv bezogen auf 100 Gewichtsteile eingesetzten Kautschuk. Bevorzugt enthalten die erfindungsgemäßen Kautschukmischungen 0,3 bis 13, insbesondere 0,5 bis 11 Gewichtsteile an erfindungsgemäßen Additiv bezogen auf 100 Gewichtsteile eingesetzten Kautschuk.

Die erfindungsgemäßen Kautschukmischungen können organische und/oder anorganische Füllstoffe enthalten, beispielsweise solche aus der Gruppe der oxidischen, der silikatischen Füllstoffe und Russe. wobei die Füllstoffe im allgemeinen im Bereich von 50 bis 200 Gewichtsteile, vorzugsweise 60 bis 120 Gewichtsteile, bezogen auf 100 Gewichtsteile an eingesetzten Kautschuken verwandt werden.

Bevorzugt enthalten die erfindungsgemäßen Kautschukmischungen wenigstens einen Füllstoff ausgewählt wird aus der Gruppe gefällter Kieselsäuren und/oder Silikate mit einer spezifischen Oberfläche von 20 bis 400 m²/g, vorzugsweise mit einer spezifischen Oberfläche von 100 bis 200 m²/g.

Das erfindungsgemäße Additiv hat die Wirkung eines Verstärkungsadditivs. So zeichnen sich bevorzugte erfindungsgemäße Kautschukmischungen beispielsweise dadurch aus, dass ein daraus bei 170°C/t95 geheiztes Vulkanisat einen Verlustfaktor tan δ bei 60°C von < 0,2, insbesondere von < 0,145, und gleichzeitig eine Härte Shore A bei 23°C von > 65 aufweist und weiterhin einen Modul 300-Wert von > 12 MPa, vorzugsweise > 15 MPa aufweist.

Bevorzugte erfindungsgemäße Kautschukmischungen zeichnen sich weiterhin dadurch aus, dass ein daraus bei 170°C/t95 geheiztes Vulkanisat einen Verlustfaktor tan δ bei 60°C von kleiner 0,145 und gleichzeitig, eine Anvulkanisationszeit von größer 500 Sekunden zeigt.

Bevorzugte erfindungsgemäße Kautschukmischungen zeichnen sich weiterhin dadurch aus, dass ein daraus bei 170°C/t95 geheiztes Vulkanisat einen Verlustfaktor tan δ bei 60°C von kleiner 0,145 und gleichzeitig, eine Ausvulkanisationszeit von kleiner 2000 Sekunden zeigt.

Bei bevorzugten erfindungsgemäßen Kautschukmischungen liegt die Mischungsviskosität ML 1+4 bei 100°C im Allgemeinen bei kleiner 150, besonders bevorzugt bei kleiner 100.

Ein weiterer Gegenstand der vorliegenden Erfindung ist die Verwendung einer erfindungsgemäßen Kautschukmischung zur Herstellung von Kautschukvulkanisaten, insbesondere von gefüllten Kautschukvulkanisaten, und Kautschukformkörpern, insbesondere von Reifen und Reifenbauteilen.

Ein weiterer Gegenstand der vorliegenden Erfindung sind Kautschukvulkanisate und Kautschukformkörper, die sich aus den erfindungsgemäßen Kautschukmischungen in bekannter Weise durch ein Vulkanisationsverfahren herstellen lassen.

Ein weiterer Gegenstand der vorliegenden Erfindung ist ein Verfahren zur Herstellung von gefüllten Kautschukvulkanisaten, das dadurch gekennzeichnet ist, dass man
i) mindestens einem Kautschuk mit
ii) 10 - 150 Gew.-%, vorzugsweise 30 - 120 Gew.-%, bezogen auf Kautschuk (i), Füllstoff und
iii) je 0,1 - 15 Gew.-%, vorzugsweise je 0,3 - 7 Gew.-%, bezogen auf Kautschuk (i), an Verbindung der Formel (I) und Formel (II) als erfindungsgemäßes Additiv
bei Massetemperaturen von mindestens 120°C und bei Scherraten von 1 - 1000 sec (exp.-1), bevorzugt 1 - 100 sec (exp.-1), mischt und anschließend nach Zugabe weiterer Vulkanisationschemikalien in üblicher Weise vulkanisiert.

Die Zugabe des erfindungsgemäßen Additivs sowie die Zugabe von gegebenenfalls weiteren Hilfsprodukten erfolgt bevorzugt im ersten Teil des Mischprozesses bei Massetemperaturen von 100 - 200 °C bei den erwähnten Scherraten, sie kann jedoch auch später bei tieferen Temperaturen (40 - 100°C) z.B. zusammen mit Schwefel und Beschleuniger erfolgen. Dabei kann das erfindungsgemäße Additiv direkt als Mischung der Komponenten der Formeln (I) und (II) oder in Form der einzelnen Komponenten zugegeben werden.

Das erfindungsgemäße Additiv oder dessen einzelne Komponenten kann dabei sowohl in reiner Form als auch aufgezogen auf inerten, organischen oder anorganischen Trägern dem Mischprozess zugeben werden. Bevorzugte Trägermaterialien sind Kieselsäure, natürliche oder synthetische Silikate, Aluminiumoxid und/oder Russe.

Als kieselsäurehaltige Füllstoffe im Sinne dieser Erfindung kommen für die erfindungsgemäßen Kautschukmischung und Kautschukvulkanisate folgende Füllstoffe in Frage:
- hochdisperse Kieselsäure, hergestellt z.B. durch Fällung von Lösungen von Silikaten oder Flammenhydrolyse von Siliziumhalogeniden mit spezifischen Oberflächen von 5 - 1000, vorzugsweise 20 - 400 m²/g (BET-Oberfläche) und mit Primärteilchengrößen von 10 - 400 nm. Die Kieselsäuren können gegebenenfalls auch als Mischoxide mit anderen Metalloxiden wie Al-, Mg-, Ca-, Ba-, Zn-, Zr-, Ti-Oxiden vorliegen.
- Synthetische Silikate, wie Aluminiumsilikat, Erdalkalisilikate wie Magnesium- oder Calciumsilikat, mit BET-Oberflächen von 20 - 400 m²/g und Primärteilchengröße von 10 - 400 nm,
- Natürliche Silikate, wie Kaolin und andere natürliche vorkommende Kieselsäuren,
- Glasfasern und Glasfaserprodukte (Matten, Stränge) oder Mikroglaskugeln.

Als weitere Füllstoffe können Russe verwendet werden. Die hierbei zu verwendenden Russe sind z.B. nach dem Flammruß, Furnace- oder Gasruß-Verfahren hergestellt und besitzen BET-Oberflächen von 20 - 200 m²/g, wie SAF-, ISAF-, IISAF-, HAF-, FEF-, oder GPF-Ruße.

Das erfindungsgemäße Additiv wird bevorzugt in Mengen von 0,1 bis 15 % bezogen auf Kautschuk, in den erfindungsgemäßen Kautschukmischungen eingesetzt.

Eine besonders bevorzugte Variante besteht in der Kombination von Kieselsäure, Ruß und erfindungsgemäßem Additiv. Bei dieser Kombination kann das Verhältnis von Kieselsäure zu Ruß in beliebigen Grenzen variiert werden. Aus reifentechnischer Sicht werden Kieselsäure:Ruß-Verhältnis von 20:1 bis 1,5:1 bevorzugt.

Die erfindungsgemäßen Kautschukvulkanisate können weitere Kautschukhilfsprodukte enthalten, wie Reaktionsbeschleuniger, Alterungsschutzmittel, Wärmestabilisatoren, Lichtschutzmittel, Ozonschutzmittel, Verarbeitungshilfsmittel, Weichmacher, Tackifier, Treibmittel, Farbstoffe, Pigmente, Wachse, Streckmittel, organische Säuren, Verzögerer, Metalloxide sowie Aktivatoren, wie Triethanolamin, Polyethylenglykol, Hexantriol, die der Gummiindustrie bekannt sind.

Die Kautschukhilfsprodukte werden in üblicher Menge, die sich u.a. nach dem Verwendungszweck der Vulkanisate richten, eingesetzt. Übliche Mengen sind 0,1 bis 30 Gew.-%, bezogen auf Kautschuk.

Als Vernetzungsmittel werden eingesetzt Peroxide, Schwefel, Magnesiumoxid, Zinkoxid, denen noch die bekannten Vulkanisationsbeschleuniger, wie Mercaptobenzothiazole, -sulfenamide, Thiurame, Thiocarbamate, Guanidine, Xanthogenate und Thiophosphate zugesetzt werden können. Bevorzugt ist Schwefel.

Die Vernetzungsmittel und Vulkanisationsbeschleuniger werden üblicherweise in Mengen von ca. 0,1 bis 10 Gew.-%, bevorzugt 0,1 bis 5 Gew.-%, bezogen auf Kautschuk, eingesetzt.

Wie bereits oben erwähnt, ist es gegen die Einwirkung von Wärme und Sauerstoff vorteilhaft Alterungsschutzmittel der Kautschukmischung hinzuzugeben. Geeignete phenolische Alterungsschutzmittel sind alkylierte Phenole, styrolisiertes Phenol, sterisch gehinderte Phenole wie 2,6-Di-tert.-Butylphenol, 2,6-Di-tert-Butyl-p-Kresol (BHT), 2,6-Di-tert.-Butyl-4-Ethylphenol, estergruppenhaltige sterisch gehinderte Phenole, thioetherhaltige sterisch gehinderte Phenole, 2,2'-Methylen-bis-(4-Methyl-6-tert-Butylphenol) (BPH) sowie sterisch gehinderte Thiobisphenole.

Falls eine Verfärbung des Kautschuks ohne Bedeutung ist, werden üblicherweise auch aminische Alterungsschutzmittel z. B. Mischungen aus Diaryl-p-phenylendiaminen (DTPD), octyliertes Diphenylamin (ODPA), Phenyl-α-Naphthylamin (PAN), Phenyl-β-Naphthylamin (PBN), vorzugsweise solche auf Phenylendiaminbasis eingesetzt. Beispiele für Phenylendiamine sind N-Isopropyl-N'-phenyl-p-Phenylendiamin, N-1,3-Dimethylbutyl-N'-Phenyl-p-Phenylendiamin (6PPD), N-1,4-Dimethylpentyl-N'-phenyl-p-Phenylendiamin (7PPD), N,N'-bis-1,4-(1,4-Dimethylpentyl)-p-Phenylendiamin (77PD) sind.

Zu den sonstigen Alterungsschutzmitteln gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden im Allgemeinen in Kombination mit phenolischen Alterungsschutzmitteln eingesetzt. TMQ, MBI und MMBI werden vor allem für NBR-Typen verwendet, die peroxidisch vulkanisiert werden.

Die Ozonbeständigkeit kann durch dem Fachmann bekannte Antioxidantien verbessert werden wie beispielsweise N-1,3-Dimethylbutyl-N'-Phenyl-p-Phenylendiamin (6PPD), N-1,4-Dimethylpentyl-N'-phenyl-p-Phenylendiamin (7PPD), N,N'-bis-1,4-(1,4-Dimethylpentyl)-p-Phenylendiamin (77PD), Enol Ether oder cyclische Acetale.

Verarbeitungshilfsmittel sollen zwischen den Kautschuk-Partikeln wirksam werden und Reibungskräften beim Mischen, Plastifizieren und Verformen entgegenwirken. Als Verarbeitungshilfsmittel kann die erfindungsgemäße Kautschukmischung alle für die Verarbeitung von Kunststoffen üblichen Gleitmittel enthalten, wie beispielsweise Kohlenwasserstoffe, wie Öle, Paraffine und PE-Wachse, Fettalkohole mit 6 bis 20 C- Atomen, Ketone, Carbonsäuren, wie Fettsäuren und Montansäuren, oxidiertes PE-Wachs, Metallsalze von Carbonsäuren, Carbonsäureamide sowie Carbonsäureester, beispielsweise mit den Alkoholen Ethanol, Fettalkoholen, Glycerin, Ethandiol, Pentaerythrit und langkettigen Carbonsäuren als Säurekomponente.

Die Vernetzung der Kautschukmischung kann sowohl mit Schwefel-Beschleuniger Systemen als auch mit Peroxiden erfolgen.

Als Vernetzer kommen z.B. peroxidische Vernetzer in Frage wie Bis(2,4-dichlorbenzyl)peroxid, Dibenzoylperoxid, Bis(4-chlorbenzoyl)peroxid, 1,1-Bis(t-butylperoxy)-3,3,5-trimethylcylohexan, tert-Butylperbenzoat, 2,2-Bis(t-butylperoxy)buten, 4,4-Di-tert-butyl peroxynonylvalerat, Dicumylperoxid, 2,5-Dimethyl-2,5-di(tert-butylperoxy)hexan, tert-Butylcumylperoxid, 1,3-Bis(t-butyl-peroxyisopropyl) benzol, Di-tert-butylperoxid und 2,5-Dimethyl-2,5-di(tert-butylperoxy)hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropantri(meth)acrylat, Triallyltrimellithat, Ethylenglycoldimethacrylat, Butandioldimethacrylat, Trimetylolpropantrimethacrylat, Zn-diacrylat, Zn-dimethacrylat, 1,2-Polybutadien oder N,N'-m-Phenylendimaleinimid geeignet.

Als Vernetzer kann auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen Kautschukmischung ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen.

Als Zusätze, mit deren Hilfe die Vernetzungsausbeute erhöht werden kann, eignen sich z.B. Dithiocarbamate, Thiurame, Thiazole, Sulfenamide, Xanthogenate, bi- oder polycyclische Amine, Guanidinderivate, Dithiophosphate, Caprolactame und Thioharnstoffderivate.

Ebenso als Zusätze geeignet sind beispielsweise: Zinkdiamindiisocyanat, Hexamethylentetramin, 1,3-Bis(citraconimidomethyl)benzol sowie zyklische Disulfane.

In der erfindungsgemäßen Kautschukmischung wird das Schwefel-Beschleuniger-System bevorzugt.

Um die Entflammbarkeit zu vermindern und die Rauchentwicklung beim Verbrennen zu verringern, kann die erfindungsgemäße Kautschukmischungszusammensetzung auch Flammschutzmittel enthalten. Als Flammschutzmittel werden beispielsweise Antimontrioxid, Phosphorsäureester, Chlorparaffin, Aluminiumhydroxid, Borverbindungen, Zinkverbindungen, Molybdäntrioxid, Ferrocen, Calciumcarbonat oder Magnesiumcarbonat verwendet.

Das Kautschukvulkanisat kann auch weitere Kunststoffe enthalten, die beispielsweise als polymere Verarbeitungshilfsmittel oder Schlagzähigkeitsverbesserer wirken. Diese Kunststoffe werden ausgewählt aus der Gruppe bestehend aus den Homo- und Copolymeren auf Basis von Ethylen, Propylen, Butadien, Styrol, Vinylacetat, Vinylchlorid, Glycidylacrylat, Glycidylmethacrylat, Acrylaten und Methacrylaten mit Alkoholkomponenten von verzweigten oder unverzweigten C1-bis C10-Alkoholen. Zu nennen sind insbesondere Polyacrylate mit gleichen oder verschiedenen Alkoholresten aus der Gruppe der C4- bis C8-Alkohole, besonders des Butanols, Hexanols, Octanols und 2-Ethylhexanols, Polymethylmethacrylat, Methyl-methacrylat-Butylacrylat-Copolymere, Methylmethacrylat-Butylmethacrylat-Copolymere, Ethylen-Vinylacetat-Copolymere, chloriertes Polyethylen, Ethylen-Propylen-Copolymere, Ethylen-Propylen-Dien-Copolymere.

Das erfindungsgemäße Kautschukvulkanisat kann beispielsweise Herstellung von Schaumstoffen. verwendet werden. Dazu werden ihr chemisch oder physikalisch wirkende Treibmittel zugefügt. Als chemisch wirkende Treibmittel kommen alle für diesen Zweck bekannten Substanzen in Betracht, wie beispielsweise Azodicarbonamid, p-Toluolsulfonylhydrazid, 4,4'-Oxy-bis(benzolsulfohydrazid), p-Toluolsulfonylsemicarbazid, 5-Phenyltetrazol, N,N'-Dinitroso-pentamethylentetramin, Zinkcarbonat oder Natriumhydrogencarbonat sowie diese Substanzen enthaltende Mischungen. Als physikalisch wirkende Treibmittel sind beispielsweise Kohlendioxid oder Halogenkohlenwasserstoffe geeignet.

Die Vulkanisation kann beispielsweise bei Temperaturen von 100 - 200°C, vorzugsweise 130 - 180°C, gegebenenfalls unter einem Druck von 10 - 200 bar erfolgen.

Die Abmischungen des Kautschuks mit dem Füllstoff und den erfindungsgemäßen Additiven kann in üblichen Mischaggregaten, wie Walzen, Innenmischer und Mischextruder, durchgeführt werden.

Die erfindungsgemäßen Kautschukvulkanisate eignen sich zur Herstellung von Formkörpern mit verbesserten Eigenschaften, z.B. für die Herstellung von Kabelmäntel, Schläuchen, Treibriemen, Förderbändern, Walzenbelägen, Reifen, Schuhsohlen, Dichtungsringe und Dämpfungselemente.

Im Folgenden soll die vorliegende Erfindung durch Beispiele erläutert werden ohne diese jedoch darauf zu beschränken.

### Beispiel 1:

### Herstellung eines erfindungsgemäßen Organosilizium-polysulfids

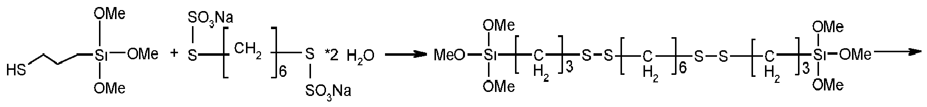

teilhydrolysiertes, über Si-O-Si-Einheiten vernetztes Produkt.

| | | |
|---|---|---|
| Apparatur: | 2000ml Vierhalskolben mit Thermometer, Tropftrichter mit Druckausgleich, Rück-flusskühler mit Gasableitungsansatz (Blasenzähler) und Schlauch, Rührwerk mit 250 Upm, pH-Meter | |
| | | |
| Vorlage: | 99,1 g = 0,25 mol 3) | Duralink^{®} HTS (98,48%; CAS-Nr.: 5719-73-800 ml |
| | vollentsalztes Wasser | |
| | | |
| | 41,1 g = 0,5 mol | Formaldehydlösung, 36,5 %ig |
| | | |
| | 42 g = 0,5 mol | Natriumhydrogencarbonat |
| | | |
| | 50 ml | Toluol (p.A.) |
| | | |
| Zulauf: | 103,3 g = 0,5 mol | 3-Mercaptopropyltrimethoxysilan (≥95%) |

In die mit Stickstoff gespülte Apparatur wurden Duralink^{®} HTS und Wasser vorgelegt. Der Rührer wurde eingeschaltet, dann wurden erst Natriumhydrogencarbonat danach Formaldehyd und anschließend das Toluol zugegeben.

Nun wurde bei einer Reaktionstemperatur von 20 bis 25°C das 3-Mercaptopropyltrimethoxysilan unter Stickstoffüberleitung innerhalb von ca. 30 Minuten zugetropft. Nach beendeter Dosierung wurde 22 Stunden bei 20 bis 25 °C nachgerührt und der Feststoff anschließend mittels D4-Fritte abgesaugt. Danach wurde das Produkt 6 mal mit je 500 ml vollentsalztem Wasser gewaschen. Das Produkt wurde anschließend bei 25°C im Vakuumtrockenschrank bis zur Gewichtskonstanz getrocknet.

### Ausbeute: 122g

Bei dem erhaltenen erfindungsgemäßen Produkt handelt es sich um ein teilvernetztes Organosilizium-polysulfid. Die Bestimmung der Struktur des erhaltenen Produktes erfolgte mittels ²⁹Si-Festkörper-NMR Untersuchung. Aus der nachfolgenden Tabelle 1 lassen sich die Signalzuordnung und Auswertung des Stoffmengenanteils/Grad der Vernetzung ablesen.

**Tabelle 1: Signalzuordnung und Auswertung des Stoffmengenanteils des Beispiels 1**

| Signallage / ppm | Zuordnung | Stoffmengenanteil / % |
|---|---|---|
| -67,6 | R-Si-(OSi)₃ | 67 |
| -58,8 | R-Si-(OSi)₂(OH/OMe) | 22 |
| -50,5 | R-Si-(OSi)₁(OH/OMe)₂ | 8 |
| -42,3 | R-Si-(OH/OMe)₃ | 3 |

| | | |
|---|---|---|
| *Stoffanteil mit einem relativen Fehler von ± 10 Prozent behaftet | | |

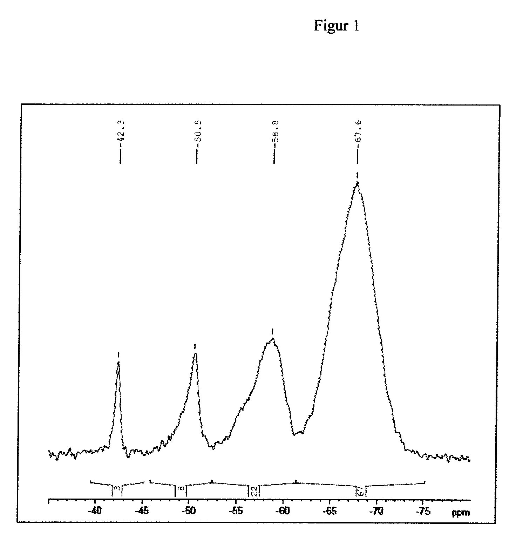

Figur 1 zeigt ein ²⁹Si -Festkörper NMR Spektrum des erfindungsgemäßen Organosilizium-polysulfids gemäß Beispiel I, gemessen unter quantitativen Bedingungen (direkte Anregung der ²⁹Si Kerne, Relaxationsdelay von 60 s) unter Probenrotation am magischen Winkel von 10 kHz.

Die ²⁹Si-Festkörper-NMR Spektren wurden protonenentkoppelt unter direkter Anregung der ²⁹Si-Kerne aufgenommen. Die Messung wurde unter MAS (magic-angle spinning) mit einer Rotationsfrequenz von 10 kHz durchgeführt. Aufgrund der Signal-lage konnten die Signale im ²⁹Si Spektrum (Abbildung 1) zugeordnet werden. Durch direkte Anregung der ²⁹Si -Kerne und einem verlängertem Recycledelay von 60 s können aus den Integralen der Signale die relativen Stoffmengenanteile der Siliziumatome bestimmt werden.

### Anwendungstechnische Ergebnisse:

Für die Prüfungen wurden folgende Kautschuk-Rezepturen gewählt, die in Tabelle 1 aufgeführt sind. Alle Zahlenangaben, sofern nichts anderes vermerkt, beziehen sich auf "parts per hundred rubber" (phr).

In einem 1,5L Innenmischer (70UpM), Starttemperatur 80°C, Mischzeit: 5 Minuten, wurden die nachfolgenden Kautschukmischungen hergestellt. Schwefel und Beschleuniger wurden zum Schluss auf einer Walze (Temperatur: 50°C) zugemischt.

**Tabelle 1: Kautschuk-Rezeptur**

| | **Referenz** | **Beispiel 1** |
|---|---|---|
| BUNA CB 24 (ölverstreckter Kautschuk der LANXESS Deutschland GmbH) | 30 | 30 |
| BUNA VSL 5025-1 (LANXESS Deutschland GmbH) | 96 | 96 |
| CORAX N 339 (handelsüblicher Russ) | 6,4 | 6,4 |
| VULKASIL S (gefällte Kieselsäure der LANXESS Deutschland GmbH) | 80 | 80 |
| TUDALEN 1849-1 (Mineralöl) | 8 | 8 |
| EDENOR C 18 98-100 | 1 | 1 |
| VULKANOX 4020/LG | 1 | 1 |
| VULKANOX HS/LG | 1 | 1 |
| ZINKWEISS ROTSIEGEL | 2,5 | 2,5 |
| ANTILUX 654 | 1,5 | 1,5 |
| Si^{®} 69 (Additiv der Formel (I)) | 6,4 | 6,4 |
| VULKACIT D/C | 2 | 2 |
| VULKACIT CZ/C | 1,5 | 1,5 |
| MAHLSCHWEFEL 90/95 CHANCEL | 1,5 | 1,5 |
| Beispiel 1 (Additiv der Formel (II)) | | 1,0 |

**Tabelle 2: Zusammenstellung der Ergebnisse**

| **Parameter** | **Einheit** | **DIN** | **Referenz** | **Beispiel 1** |
|---|---|---|---|---|
| Mooney Viskosität (ML 1+4) | [ME] | 53523 | 91 | 98 |
| Mooney Anvulkanisation bei 130°C (t5) | sec | ASTM D 5289-95 | 1032 | 668 |
| Ausvulkanisation bei 170°C / t95 | s | 53529 | 1452 | 1534 |
| Shore A Härte bei 23°C | [Shore A] | 53505 | 67 | 66 |

| Modul 300 | | | | |
|---|---|---|---|---|
| | MPa | 53504 | 16 | 16 |
| Bruchdehnung | % | 53504 | 329 | 308 |

| Zugfestigkeit | | | | |
|---|---|---|---|---|
| | MPa | 53504 | 18 | 17 |
| Abrieb | mm³ | 53516 | 87 | 83 |
| Rollwiderstand (tan δ (60 °C) | - | | 0,152 | 0,135 |

Wie die Ergebnisse in Tabelle 2 zeigen, konnte überraschend gefunden werden, dass mit dem erfindungsgemäßen Additiv ein Verlustfaktor (tan δ bei 60°C) von mehr als 10 Prozent niedriger gemessen wurde gegenüber dem Referenzprodukt. Die mechanischen Eigenschaften wie Zugfestigkeit, Bruchdehnung und Modul 300 blieben dabei nahezu unverändert. Das getestete Vulkanisat zeigt ein vergleichbares gutes Nassrutschverhalten zur Referenz (Verlustfaktor tan δ bei 0°C > 0,35) und ebenfalls sehr vorteilhafte Abriebwerte (< 90 mm³).

### Prüfungen der Kautschukmischung und der Vulkanisate:

### Mooney-Viskositätsmessung:

Die Viskosität lässt sich aus der Kraft, die Kautschuke (und Kautschukmischungen) ihrer Verarbeitung entgegensetzen, direkt bestimmen. Beim Scherscheibenviskosimeter nach Mooney wird eine geriffelte Scheibe oben und unten mit Probensubstanz umschlossen und in einer beheizbaren Kammer mit etwa zwei Umdrehungen in der Minute bewegt. Die hierzu erforderliche Kraft wird als Drehmoment gemessen und entspricht der jeweiligen Viskosität. Die Probe wird in der Regel eine Minute lang auf 100°C vorgewärmt; die Messung dauert weitere 4 Minuten, wobei die Temperatur konstant gehalten wird."

Die Viskosität wird zusammen mit den jeweiligen Prüfbedingungen angegeben, beispielsweise ML (1+4) 100°C (Mooney viscosity, large rotor, Vorwärmzeit und Prüfzeit in Minuten, Prüftemperatur).

Die Viskositäten, der in Tabelle 1 genannten Kautschukmischungen, werden mittels Scherscheibenviskosimeter nach Mooney gemessen.

### Scorch-Verhalten (Anvulkanisationszeit t 5):

Des Weiteren kann mit der gleichen Prüfung wie oben beschrieben auch das "Scorch"-Verhalten einer Mischung gemessen werden. Die gewählte Temperatur ist in diesem Patent 130°C. Der Rotor läuft solang, bis der Drehmomentswert nach Durchlaufen eines Minimums auf 5 Mooney-Einheiten relativ zum Minimumswert angestiegen ist (t5). Je größer der Wert ist (hier Einheit Sekunden), umso langsamer findet die Anvulkanisation statt (hier hohe Scorch-Werte).

### Rheometer (Vulkameter) Ausvulkanisationszeit 170°C/t95:

Der Vulkanisationsverlauf am MDR (moving die rheometer) und dessen analytischen Daten werden an einem Monsanto-Rheometer MDR 2000 nach ASTM D5289-95 gemessen. Die Ergebnisse dieser Prüfung sind in Tabelle 2 zusammengestellt.

Bei der Ausvulkanisationszeit, wird die Zeit gemessen, bei der 95% des Kautschuks vernetzt ist. Die gewählte Temperatur war 170°C.

### Bestimmung der Härte:

Zur Bestimmung der Härte der erfindungsgemäßen Kautschukmischung wurden 6 mm starke Walzfelle aus der Kautschukmischung gemäß Rezepturen der Tabelle 1 hergestellt. Aus den Walzfellen wurden Prüfkörper mit 35 mm Durchmesser geschnitten, deren Shore-Härte A -Werte mittels eines digitalen Shore-Härte-Testers (Zwick GmbH & Co. KG, Ulm) bestimmt wurden.

### Zugversuch:

Der Zugversuch dient direkt zur Ermittlung der Belastungsgrenzen eines Elastomers. Die Längenausdehnung beim Bruch wird auf die Ausgangslänge bezogen und entspricht der Bruchdehnung. Weiterhin wird auch die Kraft beim Erreichen bestimmter Dehnungsstufen, meist 50, 100, 200 und 300% bestimmt und als Spannungswert ausgedrückt (Zugfestigkeit bei der angegebenen Dehnung von 300% oder Modul 300).

Die Prüfergebnisse sind in Tabelle 2 aufgeführt.

### Dyn. Dämpfung:

Dynamische Prüfverfahren werden zur Charakterisierung des Verformungsverhaltens von Elastomeren unter periodisch veränderten Belastungen verwendet. Eine von außen angebrachte Spannung verändert die Konformation der Polymerkette.

Bei dieser Messung wird der Verlustfaktor tan δ indirekt über das Verhältnis zwischen Verlustmodul G" und Speichermodul G' bestimmt.

## Patentansprüche

1. Mischung von Organosilizium-polysulfiden enthaltend mindestens eine Verbindung der Formel
R¹R²R³Si-X¹-Sₓ-X²-SiR¹R²R³ (I)
worin
R¹, R² und R³ unabhängig voneinander für Alkoxy stehen,
X¹ und X² unabhängig voneinander für Alkylen stehen,
und
x für eine ganze Zahl von 1 bis 6 steht,
und mindestens eine Verbindung der Formel
R⁴R⁵R⁶Si-X³-(-S_{y}-Y-)ₘ-S_{y}-X⁴-SiR⁷R⁸R⁹ (II)
worin
X³ und X⁴ unabhängig von einander für Alkylen stehen,
Y für eine zweiwertige, gegebenenfalls substituierte, gegebenenfalls Heteroatome enthaltende aliphatische, cycloaliphatische oder aromatische Gruppe steht,
y für eine ganze Zahl von 1 bis 6 steht,
m für eine ganze Zahl von 1 bis 20 steht
und
R⁴, R⁵, R⁶, R⁷, R⁸ und R⁹ unabhängig voneinander für -OH, -OMetall, Alkyl, Alkoxy, Phenyl, Phenoxy
oder für einen Rest der Formel
-O-R⁵R⁶Si-X³-(-S_{y}-Y-)ₘ-S_{y}-X⁴-SiR⁷R⁷R⁹ (IIa)
steht,
wobei die Substituenten und Indices der Formel (IIa) die oben für Formel (II) angegebene Bedeutung haben,
Metall für ein Metallion aus der Reihe der Alkali- und Erdalkalimetalle steht,
und gegebenenfalls die Reste der Formel (IIa) über eine oder mehrere -Si-O-Si-Einheiten mit weiteren Resten der Formel (IIa) verbunden sind.

2. Mischung gemäß Anspruch 1, **dadurch gekennzeichnet, dass** sie mindestens eine Verbindung der in Anspruch 1 angegebenen Formel (I), worin
R¹, R² und R³ unabhängig voneinander für C₁-C₆-Alkoxy stehen,
X¹ und X² unabhängig voneinander für C₁-C₆-Alkylen stehen,
und
x für eine ganze Zahl von 1 bis 4 steht,
und mindestens eine Verbindung der in Anspruch 1 angegebenen Formel (II),
worin
X³ und X⁴ unabhängig von einander für C₁-C₆-Alkylen stehen,
Y für einen geradkettigen, verzweigten oder cyclischen C₁-C₁₈-Alkylenreste steht der gegebenenfalls mit C₆-C₁₂-Aryl-, C₁-C₈-Alkoxy- oder Hydroxygruppen substituiert ist und der gegebenenfalls durch Sauerstoff-, Schwefel- oder Stickstoffatome oder durch C₆-C₁₂-Aryl unterbrochen ist, oder für eine zweiwertige, gegebenenfalls substituierte, gegebenenfalls Heteroatome enthaltende aliphatische, cycloaliphatische oder aromatische Gruppe steht,
y für eine ganze Zahl von 2 bis 4 steht,
m für eine ganze Zahl von 1 bis 6 steht
und
R4, R5, R6, R7, R8 und R9 unabhängig voneinander für -OH, -OMetall, oder C₁-C₈-Alkoxy stehen,
oder für einen Rest der Formel
-O-R⁵R⁶Si-X³-(-S_{y}-Y-)ₘ-S_{y}-X⁴-SiR⁷R⁸R⁹ (IIa)
stehen, wobei die Substituenten und Indices der Formel (IIa) die oben für Formel (II) angegebene Bedeutung haben,
Metall für ein Metallion ausgewählt aus der Reihe Na, K, Mg/2 und Ca/2 steht,
und gegebenenfalls die Reste der Formel (IIa) über eine oder mehrere -Si-O-Si-Einheiten mit weiteren Resten der Formel (IIa) verbunden sind,
enthält.

3. Mischung gemäß Ansprüchen 1 und 2, **dadurch gekennzeichnet, dass** sie mindestens eine Verbindung der in Anspruch 1 angegebenen Formel (I), worin
R¹, R² und R³ unabhängig voneinander für C₁-C₂-Alkoxy stehen,
X¹ und X² unabhängig voneinander für C₂-C₃-Alkylen stehen,
und
x für eine ganze Zahl von 2 bis 4 steht,
und mindestens eine Verbindung der in Anspruch 1 angegebenen Formel (II),
worin
X³ und X⁴ unabhängig von einander für C₂-C₃-Alkylen stehen,
Y für einen Rest der Formel 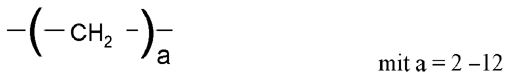 oder 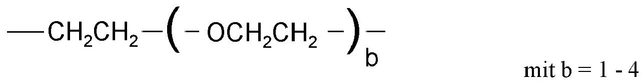 steht,
y für eine ganze Zahl von 2 bis 4 steht,
m für eine ganze Zahl von 1 bis 6 steht,
R⁴, R⁵, R⁶, R⁷, R⁸ und R⁹ unabhängig voneinander für -OH, -ONa, -OK, -O-(Mg/2), -O-(Ca/2), Methoxy oder Ethoxy oder
für einen Rest der Formel
-O-R⁵R⁶Si-X³-(-S_{y}-Y-)ₘ-S_{y}-X⁴-SiR⁷R⁸R⁹ (IIa)
stehen, wobei die Substituenten und Indices der Formel (IIa) die oben für Formel (II) genannten Bedeutungen haben, und gegebenenfalls die Reste der Formel (IIa) über eine oder mehrere -Si-O- Si-Einheiten mit weiteren Resten der Formel (IIa) verbunden sind, enthält.

4. Mischung gemäß wenigstens einem der Ansprüche 1 bis 3, **dadurch gekennzeichnet, dass** sie mindestens eine Verbindung der in Anspruch 1 angegebenen Formel (I), worin
R¹, R² und R³ unabhängig voneinander für Methoxy oder Ethoxy stehen,
X¹ und X² unabhängig voneinander für C₂-C₃-Alkylen stehen,
und
x für 2, 3 oder 4 steht,
und mindestens eine Verbindung der in Anspruch 1 angegebenen Formel (II),
worin
X³ und X⁴ unabhängig von einander für C₂-C₃-Alkylen stehen,
Y für -(CH2)-₆ steht
y für 2, 3 oder 4 steht,
m für 1 steht
R⁴, R⁵, R⁶, R⁷, R⁸ und R⁹ unabhängig voneinander für -OH, -ONa, Methoxy oder Ethoxy oder für einen Rest der Formel
-O-R⁵R⁶Si-X³-(-S_{y}-Y-)ₘ-S_{y}-X⁴-SiR⁷R⁸R⁹ (IIa)
stehen, wobei die Substituenten und Indices der Formel (IIa) die oben für Formel (II) genannten Bedeutungen haben, und gegebenenfalls die Reste der Formel (IIa) über eine oder mehrere -Si-O-Si-Einheiten mit weiteren Resten der Formel (IIa) verbunden sind, enthält.

5. Mischung gemäß wenigstens einem der Ansprüche 1 bis 4, **dadurch gekennzeichnet, dass** sie mindestens eine Verbindung der Formel
R⁴R⁵R⁶Si-X³-(-S_{y}-Y-)ₘ-S_{y}-X⁴-SiR⁷R⁸R⁹ (II)
worin
X³ und X⁴ unabhängig von einander für Alkylen stehen,
Y für eine zweiwertige, gegebenenfalls substituierte, gegebenenfalls Heteroatome enthaltende aliphatische, cycloaliphatische oder aromatische Gruppe steht,
y für eine ganze Zahl von 1 bis 6 steht,
m für eine ganze Zahl von 1 bis 20 steht
und
R⁴, R⁵, R⁶, R⁷, R⁸ und R⁹ unabhängig voneinander für -OH, -OMetall, Alkyl, Alkoxy, Phenyl, Phenoxy stehen, und
mindestens einer der Substituenten R⁴, R⁵, R⁶, R⁷, R⁸ und R⁹ für
-O-R⁵R⁶Si-X³-(-S_{y}-Y-)ₘ-S_{y}-X⁴-SiR⁷R⁸R⁹ (IIa)
steht, wobei die Substituenten und Indices der Formel (IIa) die oben für Formel (II) angegebene Bedeutung haben,
Metall für ein Metallion aus der Reihe der Alkali- und Erdalkalimetalle steht,
und gegebenenfalls die Reste der Formel (IIa) über eine oder mehrere -Si-O-Si-Einheiten mit weiteren Resten der Formel (IIa) verbunden sind,
enthält.

6. Mischung gemäß wenigstens einem der Ansprüche 1 bis 5, **dadurch gekennzeichnet, dass** sie 50-95 Gew.-% an Verbindung (I) und 5-50 Gew.-% an Verbindung (II) bezogen auf die Mischung enthält.

7. Verwendung einer Mischung gemäß wenigstens einem der Ansprüche 1 bis 6 als Additiv für kieselsäurehaltige Kautschukmischungen.

8. Kieselsäurehaltige Kautschukmischung enthaltend als Additiv eine Mischung gemäß wenigstens einem der Ansprüche 1 bis 6.

9. Kautschukmischung gemäß Anspruch 8, **dadurch gekennzeichnet, dass** sie mindestens einen SBR-Kautschuk und mindestens einen BR-Kautschuk enthält.

10. Kautschukmischung gemäß wenigstens einem der Ansprüche 8 und 9, **dadurch gekennzeichnet, dass** sie mindestens einen SBR-Kautschuk und mindestens einen BR-Kautschuk im Gewichts-Verhältnis SBR:BR= 60:40 bis 90:10 enthält.

11. Kautschukmischung gemäß wenigstens einem der Ansprüche 8 bis 10, **dadurch gekennzeichnet, dass** sie mindestens einen NR-Kautschuk enthält.

12. Verwendung einer Kautschukmischung gemäß wenigstens einem der Ansprüche 8 bis 11 zur Herstellung von Vulkanisaten und Kautschukformkörpern, insbesondere von Reifen und Reifenbauteilen.

13. Vulkanisate und Kautschukformkörper erhältlich durch Vulkanisation einer Kautschukmischung gemäß wenigstens einem der Ansprüche 8 bis 11.
